# EUROPEAN PATENT SPECIFICATION

(11) **EP 2 618 676 B1**
(45) Date of publication and mention of the grant of the patent: **22.07.2015**
(21) Application number: 11764134.0
(22) Date of filing: 20.09.2011
(51) Int. Cl.: A23C 9/12, A23C 9/13, A23C 9/123, A23C 9/127

(54) **DAIRY NUTRITION WITH CEREALS**
MILCHNAHRUNG MIT GETREIDE
NUTRITION LAITIÈRE AVEC DES CÉRÉALES

(30) Priority: 20.09.2010 WO PCT/IB2010/002627
(43) Date of publication of application: 31.07.2013
(73) Proprietor: Compagnie Gervais Danone, 75009 Paris (FR)
(72) Inventor: FRANCOIS, Alan, F-91750 Chevannes (FR); BOËLE, Christian, F-02400 Gland (FR); CAMPARGUE, Christian, F-91530 Saint Cheron (FR)
(74) Representative: Cabinet Plasseraud
(86) International application number: PCT/EP2011/066269
(87) International publication number: WO 2012/038391

(56) References cited:
- EP-A2- 0 807 385
- US-A1- 2009 061 047
- US-A1- 2009 252 831
- Teigue Payne: "Good Morning Breakfast Milk", www.develptechnology.com , January 2009 (2009-01), page 1, XP002626832, The Food & Beverage Industry Packaging Reporter Retrieved from the Internet: URL:www.developtechnology.com [retrieved on 2011-03-07]

## Description

The invention concerns dairy nutrition with cereals. It concerns the use of a fermented dairy product for mixing with cereals.

Nutrition is an important factor in providing and maintaining health. Nutrition provides the energy and the nutrients needed for life. It is recommended to have a balanced nutrition, in quantity, as well as in variety.

Cereals are an appreciated and useful possible component of nutrition. Cereals constitute for example a good source of energy as they comprise carbohydrates, and are a good source of fibers. Milk or milk substitutes (such as soy milk, almond milk, rice milk or rice beverages) are a good source of proteins and calcium. The combination of cereals with milk or milk substitutes constitutes a good and well balanced meal, and thus a good source of nutrition. Milk and milk substitutes are also a good accommodation of cereals, optionally with added sugar or sweeteners. They allow some more indulgence compared to consumption of cereals alone. People typically mix milk with cereals. The preferred time of consumption is in the morning, at breakfast. The consumption of a mixture of milk with cereals as a breakfast is considered as a good nutritional program.

However some people are reluctant to eat milk products for health reasons (like allergies or intolerance), or for taste reasons. This is also true with milk substitutes. In these cases, there is a need for an other nutrition. There is a need for a well balanced meal, typically providing some carbohydrates, proteins, fibers and calcium, which can be absorbed with a good compliance, and which does not imply the use of milk or of a milk substitute.

The publication Teigue Payne ("Good Morning Breakfast Milk", www.develptechnology.com, January 2009) relates to the product Good Morning Breakfast Milk, which was launched in 2006.

Document US2009/0252831 discloses a process for manufacturing a fermented milk.

Document EP0807385 describes pourable, acid stable, sour creams based on whey protein.

Document US2009/061047 discloses fermented dairy products with a high fiber content.

The invention addresses at least one of the above mentioned problems and/or one of the above mentioned needs by providing the use of a fermented dairy product contained in a container for mixing with cereals,
- wherein the mixing comprises the following steps:
   a) providing cereals in a recipient having an upper opening, preferably a bowl, a cup, a glass, or a plate,
   b) pouring the fermented dairy product from the container onto the cereals, and
   c) optionally stirring with a stirring mean, preferably with a spoon,
- and wherein the fermented dairy product has a viscosity of from 300 to 600 mPa.s, preferably of from 400 to 550 mPa.s.

The invention also concerns a process of mixing the fermented dairy product with cereals as described in the preceding paragraph.

The invention also concerns a fermented dairy product contained in a container, said container comprising indication(s) about the mix with cereals.

The invention also concerns a method for promoting the consumption of a fermented dairy product contained in a container, by indicating how to mix said fermented dairy product with cereals, preferably by indicating this on said container.

It is believed that the viscosity allows a particularly good perception of the product by the user (typically a consumer). It is believed that the viscosity allows a good covering of the cereals, typically a covering that does not immediately completely embed the cereals, and/or a covering that does not require much stirring. It is believed that the fermented dairy product, when added onto the cereals, surprisingly provides a progressive covering of the cereals and/or a progressive flow on the cereals that constitutes a good signal to the consumer. It is believed that the fermented dairy product provides a good hydration of the cereals, progressively delivering softness to the cereals. Surprisingly it was found that it was possible to provide a fermented dairy product which has a good nutritional profile, and which provides a good and appropriate meal, typically for breakfast.

### Definitions

In the present specification the viscosity refers to the viscosity as measured at 10°C, at a shear rate of 64 s⁻¹, preferably after 10 s at this shear rate, preferably with a rheometer with 2 co-axial cylinders, for example with a Mettler® RM 180 or 200.

In the present specification the use of a product is intended to cover the use itself, optionally with the connected intention, but is also intended to cover any communication with commercial or legal potential consequences, associated to the product, for example advertisement, indications, instructions or recommendations on the package of the product, indications, instructions or recommendation on commercial support, such as leaflets, brochures, posters, websites. Instructions, indications or recommendation can be provided in a written form and/or in an image form, such as a picture, a drawing, a scheme, a photography or a film.

### Fermented dairy product:

The fermented dairy product used in the invention is a fermented dairy product having a viscosity of from 300 to 600 mPa.s, preferably of from 400 to 550 mPa.s. Said product is for example a yogurt or a fermented milk product. The viscosity can be for example of from 300 to 350 mPa.s, or of from 350 to 400 mPa.s, or of from 400 to 500 mPa.s, or from 500 to 550 mPa.s, or of from 550 to 600 mPa.s.

Fermented dairy products are known by the one skilled in the art. The fermented dairy product typically derives from milk, typically animal milk. The animal milk is typically cow milk, but one can use alternative animal milks, such as sheep milk or goat milk. Milks typically comprise proteins (at least 1% by weight). Animal milk for example typically comprises casein.

The product is a fermented product and thus comprises microorganisms, such as lactic acid bacteria and/or probiotics (the probiotics can be lactic acid bacteria). These are also referred to as ferments or cultures. Lactic acid bacteria are known by the one skilled in the art. Probiotics are also known by the one skilled in the art. Examples of probiotics include some *Bifidobacteria* and *Lactobacilli,* such as *Bifidobacterium breve, Lactobacillus acidophilus, Bifidobacterium animalis, Bifidobacterium animalis* subsp *lactis, Bifidobacterium infantis, Bifidobacterium longum, Lactobacillus casei, Lactobacillus casei, Lactobacillus paracasei, Lactobacillus reuteri, Lactobacillus plantarum, Lactobacillus rhamnosus.*

In one embodiment the fermented dairy product is a fermented milk product or a yogurt. It is mentioned that yogurts are considered as being specific fermented milk products.

Fermented animal milk products are known by the one skilled in the art. They are products made from of animal milk (with further additives), having undergone a fermentation step. The fermentation is typically done by microorganisms such as bacteria and/or yeasts, preferably at least bacteria, preferably lactic acid bacteria, and leads to the production of fermentation products, for example lactic acid, and/or to the multiplication of the microorganisms. The designation "fermented milk" can depend on local legislation, but is typically given to a dairy product prepared from skimmed or full fat milk, or concentrated or powdered milk, having undergone a heat treatment at least equivalent to a pasteurization treatment, and being inoculated with lactic acid producing microorganisms such as *Lactobacilli (Lactobacillus acidophilus, Lb. casei, Lb. plantarum, Lb. reuteri, Lb. johnsonii),* certain *Streptococci (Streptococcus thermophilus), Bifidobacteria (Bifidobacterium bifidum, B. longum, B. breve, B. animalis)* and/or *Lactococci (Lactococcus lactis).*

Fermented vegetal milk products are known by the one skilled in the art. They are products essentially made up of vegetal milk, having a vegetal extract as a major constituent beyond water, and having undergone a fermentation step. The fermentation is typically done by microorganisms such as bacteria and/or yeasts, preferably at least bacteria, and leads to the production of fermentation products, for example lactic acid, and/or to the multiplication of the microorganisms. By vegetal extract as a major constituent, it is typically referred to a vegetal content at least equal to 50% by weight of dry matter, preferably from 70% to 100%. The vegetal milk can be for example soy milk, oat milk, rice milk, almond milk, rice milk or rice beverage or a mixture thereof.

The fermented dairy product typically comprises lactic acid bacteria. The lactic acid bacteria typically comprise:
- a mixture of *Streptococcus thermophilus* and *Lactobacillus delbrueckii* subsp. *bulgaricus,* and
- optionally a *Bifidobacterium.*

In one embodiment, the fermented dairy product comprises a *Bifidobacterium,* for example *Bifidobacterium animalis* subsp *lactis,* for example strain CNCM I-2494 deposited on June 20 2000 at CNCM (Collection Nationale de Cultures de Microorganismes - Institut Pasteur, 28 rue du Docteur Roux 75724 Paris Cedex 15, France), or Bifidobacterium BB-12® available at Hansen, or *Bifidobacterium animalis* subsp. *lactis* HN019 available at Danisco. Bifidobacteria, especially strain CNCM I-2494, promote a good intestinal or digestive comfort. This is well documented. Products comprising *Bifidobacteria* therefore provide an improved balanced nutrition when mixed with cereals. Preferably the fermented dairy product comprises *Bifidobacteria,* preferably at least 10⁷ CFU/g of *Bifidobacteria.*

The fermented dairy product can be prepared by any appropriate process. Such process typically involves pasteurizing milk (optionally introduced in the form of a powder then mixed with water), and then allowing a fermentation (after addition of ferments). Fermentation allows a decrease of the pH with production of lactic acid by the lactic acid bacteria. Under a setting pH (usually of from 4 to 5), proteins coagulate, to form a set product. After fermentation, additives can be added, for example in the form of a preparation comprising fruits, syrup, optionally thickeners, and optionally aroma. After fermentation, after, during or before addition of additives, the set product is usually stirred, in conditions such that the desired viscosity is obtained. The stirring can be provided by simple circulation in equipments such as pipes or pumps. The stirring can also be provided by mixing means such as static mixers or rotating agitators.

The viscosity of the fermented dairy product is of from 300 to 600 mPa.s, preferably of from 400 to 550 mPa.s. The viscosity can for example be the viscosity at the end of the production process (at D day), or at D+14 days, and/or at D+30 days, and/or at D+45 days.

The fermented dairy product can comprise any ingredient typically contained in a fermented dairy product. These are known by the one skilled in the art. Examples include gums, sugars or syrups, pieces of fruits, nuts, fruit extracts and/or preparations thereof, flavours, aromas, further vitamins, sweeteners such as aspartame and/or acesulfam and/or steviosides, further nutrients additives, for example minerals, preservatives, stabilizers, thickeners or fibers. It is mentioned that the product typically comprises water, for example from 50 to 99% by weight.

The quality of milk or milk substitute (fat content, carbohydrate content, including for example lactose content, proteins content, including casein content), the amount thereof, the nature and amount of additives (further ingredients such as syrups, fruits etc) determine a nutritional profile, typically characterized by amounts of energy and/or of carbohydrates, and/or of added sugar, and/or of fat, and/or of proteins. Fat herein also refers to lipids. Carbohydrate is also referred to as total sugar.

In one embodiment, the fermented dairy product has the following features, for 100 g of product:
- energy of less than 65 kcal, preferably less than 60 kcal, preferably less than 55 kcal,
- carbohydrate of less than 10 g,
- added sugar of less than 10 g,
- proteins of less than 10 g, preferably less than 5 g, and/or
- fat of more than 1 g and optionally less than 3.5 g.

In one embodiment, the fermented dairy product has the following features, for 100 g of product:
- energy of less than 65 kcal, preferably less than 60 kcal, preferably less than 55 kcal,
- carbohydrate of less than 10 g,
- added sugar of less than 10 g, and
- proteins of less than 10 g, preferably less than 5 g.

In one embodiment the fermented dairy product has the following feature, for 100 g of product:
- fat of more than 1 g and optionally less than 3.5 g.

In one embodiment the fermented dairy product has the following features, for 100 g of product:
- energy of less than 65 kcal, preferably less than 60 kcal, preferably less than 55 kcal,
- carbohydrate of less than 10 g,
- added sugar of less than 10 g,
- proteins of less than 10 g, preferably less than 5 g, and
- fat of more than 1 g and optionally less than 3.5 g.

In one embodiment the fermented dairy product has a total sugar content of higher than 5% by weight, and preferably of lower than 15% by weight.

In one embodiment the fermented dairy product has a fat content of from 1.5 % to 2.5% by weight, preferably of from 1.9% to 2.1 % by weight.

The fermented dairy product is typically free of cereals. However it will be mixed with cereals by the user.

In one embodiment the fermented dairy product is a plain product. Such products typically do not comprise any fruit, cereals, nuts and/or identified aromas (or at least significant amounts thereof). Preferably the fermented dairy product is a plain product without sugar or sweeteners (or at least significant amounts thereof).

In one embodiment the fermented dairy product has substantially no added sugar. Typically added sugar is of less than 0.5 g, preferably less than 0.1 g, per 100 g of fermented dairy product.

In one embodiment, the fermented dairy product comprises a fruit preparation, a syrup, an aroma, and/or chocolate chips.

### Container

The fermented dairy product of the invention is contained in a container. It is appropriately conditioned at the end of the preparation process, by substantially filling the container with the fermented dairy product, and then typically sealing the container.

The container is typically a container which is appropriate for pouring the fermented dairy product out of the container. It has typically a form which is more high (vertical, top to bottom) than wide (longer horizontal dimension of the section, for example diagonal, diameter). The container has preferably a form factor between height and width of at least 1, preferably of at least 1.2, preferably of at least 1.5, preferably of at least 2.

Typically the container has a pouring mean, or can be modified to present a pouring mean, said pouring mean being preferably a neck, a corner or a spout. The pouring mean is preferably located at the top of the container.

The container can be made of any appropriate material, for example plastic, such as polystyrene, or paperboard, or a combination thereof. For example, it can be made of a layered material having a paperboard layer, a plastic layer, and optionally an aluminum foil. For example, the container can be a plastic bottle or a brick carton.

The container can be for example a 125 ml or 125 g container, a 200 ml or 200 g container, a 250 ml or 250 g container, a 500 ml or 500 g container, a 750 ml or 750 g container, a 1 l or 1 kg container, or a 1.5 l or 1.5 kg container.

The container is a single compartment container. It is typically not associated to another container. It is typically not associated to a container comprising cereals. Indeed the cereals are typically provided from another container, not associated to the container containing the fermented dairy product.

### Cereals

The cereals are typically provided from a container different from said recipient of step a). Cereals which are appropriate for consumption, for example at breakfast, are known by the one skilled in the art. Appropriate cereals are often referred to as breakfast cereals. These are food made from processed grains. The processing is a modification of a grain or mixture of grains, typically with a cooking step and/or a drying step. It can be made for example from wheat, oat, rice, corn, or a mixture thereof. The cereals can comprise additives such as sugars, syrups, honey, nuts, dried fruits or chocolate.

The cereals can be in various forms. They can be for example:
- cereals clusters,
- cereals flakes,
- crisped cereals, or
- a mixture thereof.

### Mixing process - Process of use

The mixing process comprises the following steps:
a) providing cereals in a recipient having an upper opening, preferably a bowl, a cup, a glass, or a plate,
b) pouring the fermented dairy product from the container onto the cereals, and
c) optionally stirring with a stirring mean, preferably with a spoon.

In step a) the cereals are typically transferred from a container containing the cereals to a recipient having an upper opening. The recipient has typically an opening with a horizontal section having as longest dimension (for example diameter or diagonal) of at least 5 cm, preferably 10 cm, which can allow proper consumption after mixing with the product. The recipient can be for example a bowl, a cup, a glass, or a plate.

In step b) one typically pours the fermented dairy product from its container onto the cereals. The fermented dairy product allows a good flow onto the cereals and/or a good covering of the cereals. Pouring means of the container can ensure a better pouring. It is preferred that the weight ratio between the fermented dairy product and the cereals be higher than 112 / 50 = 2.24. The ratio can be higher than 2.5, or even higher than 3. The ratio is typically lower than 10. The process allows some flexibility in dosing the cereals and the fermented dairy product, which is appreciated by the user. Such flexibility is not available when a container of fermented dairy product is associated to a container of cereals.

In optional step c) one can stir the mixture obtained at step b). Stirring with a spoon is for example appropriate. Then the spoon can be used to bring the mixture to the mouth.

Between step b) and step c) one can add additives such as sugars, sweeteners, jams, honey, nuts, fruits or chocolate.

The mixture can be administered orally, for example with a spoon, just after step b) or step c), or after letting the mixture to rest. The resting time can be for example of from 1 second to 1 minute, or of from 1 minute to 5 minutes, or of form 5 minutes to 10 minutes, or of from 10 minutes to 15 minutes, or of from 15 minutes to 30 minutes. During this time the cereals might hydrate. One can set hydration of the cereals with the resting time.

In a final step the mixture is processed from the mouth to the stomach, by eating.

The container can present indications to pour the fermented dairy product onto the cereals, preferably a written suggestion, a recommendation, an instruction, a drawing, a picture, or an association of these indications.

Further details or advantages to the invention might appear in the following non limitative examples.

### Examples

### Example 1: Plain pouring yogurt

A low fat pouring yogurt having the following composition is prepared:

| Ingredient | Amount |
|---|---|
| Skimmed Milk | 87.5% |
| Skimmed Milk Concentrate | 7.1% |
| Cream | 4.0% |
| Water | 1.3% |
| Culture* | 0.1% |

| | |
|---|---|
| * *Streptococcus thermophilus, Lactobacillus delbrueckii subsp. bulgaricus, Bifidobacterium animalis* subsp *lactis* | |

### Preparation

A regular yogurt process is followed for the yogurt fermentation. After 8h of fermentation at 37°C, the batch is then cooled to 6°C, harvested and processed with stirring (pumps, pipes, dosing lines...), so as to reach the targeted viscosity (around 500 mPa.s). The preparation day is referred to as D.
The product is then directly conditioned in a 1 L Tetra® Pack brick carton.

### Tests

The viscosity is measured by applying a regular shearing strength increase using a rheometer with 2 co-axial cylinders. The rheometer is a RM 180 or RM 200 from METTLER. With these tools, the Mobile n°1 is used together with the pot n°1. The 64 s⁻¹ shearing is applied during 10 seconds on the product at 10°C.

The viscosity is of 500 mPa.s at D+14 days.
The pH is of from 4.65 (D+0) to 4.4 (D+35).

The nutritional profile of the composition is as follows:

| | Per 100 g | Per serving (125g) | GDA^{*} CIAA per serving | GDA^{*} UK per serving |
|---|---|---|---|---|
| | Medium Values | Medium Values | | |
| Energy | 51 kcal | 64 kcal | 3 | 3 |
| Protein | 4.1 g | 5.1 g | 10 | 11 |
| Carbohydrate | 4.9 g | 6.1 g | 2 | 3 |
| Of which sugars (add sugar) | 4.9 g (0 g) | 6.1 g | 7 | 7 |
| Fat | 1.7 g | 2.1 g | 3 | 3 |
| Of which saturates | 1.1 g | 1.4 g | 7 | 7 |
| Fibres | Trace | Trace | <1 | <1 |
| Sodium | 0.04 g | 0.05 g | 2 | 2 |
| Calcium | 144 mg | 180 mg | | |

| | | | | |
|---|---|---|---|---|
| * % of adults guideline daily amount | | | | |

### Mixing with cereals:

125 g of the plain pouring yogurt described above is mixed with 30 g of the following cereals:
- Kellogg's Original Corn flakes®
- Kellogg's Special K®
One provides from the packaging to bowl, then one pours the yogurt onto the cereals, then one stirs the mixture with a spoon.

The nutritional profile of a mixture of cereals and yogurt is as follows (the nutritional profile of the cereals is reported from the packaging).

| | 125 g yogurt + 30 g Corn Flakes (% GDA UK) | 125 g half skimmed milk* + 30 g Corn flakes (% GDA UK) | 125 g yogurt + 30 g Special K® (% GDA UK) | 125 g half skimmed milk* + Special K® (% GDA UK) |
|---|---|---|---|---|
| Energy | 177 (9% GDA) | 174 (9% GDA) | 177 (9% GDA) | 174 (9% GDA) |
| Protein | 7.2 (16% GDA) | 6.5 (14% GDA) | 9.3 (21% GDA) | 8.6 (19% GDA) |
| Carbohydrate | 31.3 (14% GDA) | 31.1 (14% GDA) | 28.9 (13% GDA) | 28.7 (12% GDA) |
| Of which sugar | 8.5 (9% GDA) | 8.3 (9% GDA) | 11.3 (12% GDA) | 11.0 (12% GDA) |
| Fat | 2.37 (3% GDA) | 2.4 (3% GDA) | 2.55 (4% GDA) | 2.6 (4% GDA) |
| Fibre | 0.9 (4% GDA) | 0.9 (4% GDA) | 0.75 (3% GDA) | 0.8 (3% GDA) |

| | | | | |
|---|---|---|---|---|
| * values extracted from Dairy council report | | | | |

The nutritional profile of the yogurt is almost equivalent to the nutritional profile of a similar mixture of milk and the same cereals.

### Example 2: Vanilla pouring yogurt.

The Vanilla Pouring Yogurt consists of 94% of the plain pouring yogurt of example 1, mixed with 6% of a vanilla preparation comprising a syrup, a thickener and a vanilla aroma.

The viscosity of the product is measured as in Example 1.
The viscosity is of 500 mPa.s at D+14 days.
The pH is of from from 4.65 (D+0) to 4.4 (D+35).

The nutritional profile of the composition is as follows:

| | Per 100 g | Per serving (125g) | GDA* CIAA per serving | GDA* UK per serving |
|---|---|---|---|---|
| | Medium Values | Medium Values | | |
| Energy | 62 kcal | 78 kcal | 4 | 4 |
| Protein | 3.9 g | 4.9 g | 10 | 11 |
| Carbohydrate | 8.1 g | 10.1 g | 4 | 4 |
| Of which sugars (added sugar) | 8 g (8 g) | 10g | 11 | 11 |
| Fat | 1.6 g | 2.0 g | 3 | 3 |
| Of which saturates | 1.0 g | 1.3 g | 7 | 7 |
| Fibres | Trace | Trace | <1 | <1 |
| Sodium^{***} (equivalent as salt) | 0.04 g (0.1 g) | 0.05 g (0.1 g) | 2(2) | 2(2) |
| Calcium | 135 mg | 169 mg | | |

| | | | | |
|---|---|---|---|---|
| ^{*} % of adults guideline daily amount | | | | |

### Mixing with cereals:

125 g of the vanilla pouring yogurt described above is mixed with 30 g of the following cereals:
- Kellogg's Original Corn flakes®
- Kellogg's Special K®
One provides from the packaging to bowl, then one pours the yogurt onto the cereals, then one stirs the mixture with a spoon.

The nutritional profile of a mixture of cereals and yogurt is as follows (the nutritional profile of the cereals is reported from the packaging).

| | 125 g yogurt + 30 g Corn Flakes (% GDA UK) | 125 g half skimmed milk* + 30 g Corn flakes (% GDA UK) | 125 g yogurt + 30 g Special K® (% GDA UK) | 125 g half skimmed milk* + Special K® (% GDA UK) |
|---|---|---|---|---|
| Energy | 191 (10% GDA) | 174 (9% GDA) | 172 (10% GDA) | 174 (9% GDA) |
| Protein | 7 (16% GDA) | 6.5 (14% GDA) | 9.1 (20% GDA) | 8.6 (19% GDA) |
| Carbohydrate | 35.3 (15% GDA) | 31.1 (14% GDA) | 32.9 (14% GDA) | 28.7 (12% GDA) |
| Of which sugar | 12.4 (14% GDA) | 8.3 (9% GDA) | 15.1 (17% GDA) | 11.0 (12% GDA) |
| Fat | 2.27 (3% GDA) | 2.4 (3% GDA) | 2.45 (4% GDA) | 2.6 (4% GDA) |
| Fibre | 0.9 (4% GDA) | 0.9 (4% GDA) | 0.75 (3% GDA) | 0.8 (3% GDA) |

| | | | | |
|---|---|---|---|---|
| * values extracted from Dairy council report | | | | |

The nutritional profile of the yogurt is almost equivalent to the nutritional profile of a similar mixture of milk and the same cereals.

### Example 3: Strawberry pouring yogurt.

The Strawberry Pouring Yogurt consists of 94% of the plain pouring yogurt of example 1, mixed with 6% of a Strawberry fruit preparation comprising fruits, a syrup, a thickener and an aroma.

The viscosity of the product is measured as in Example 1.
The viscosity is of 500 mPa.s at D+14 days.
The pH is of from from 4.65 (D+0) to 4.4 (D+35).

The nutritional profile of the composition is as follows:

| | Per 100 g | Per serving (125g) | GDA^{*} CIAA per serving | GDA^{*} UK per serving |
|---|---|---|---|---|
| | Medium Values | Medium Values | | |
| Energy | 59 kcal | 74 kcal | 4 | 4 |
| Protein | 3.9 g | 4.9 g | 10 | 11 |
| Carbohydrate | 7.3 g | 9.1 g | 3 | 4 |
| Of which sugars (added sugar) | 7.2 g (7.2 g) | 9g | 10 | 10 |
| Fat | 1.6 g | 2.0 g | 3 | 3 |
| Of which saturates | 1.0 g | 1.3 g | 7 | 7 |
| Fibres | 0.1 | 0.1 | <1 | <1 |
| Sodium*** (equivalent as salt) | 0.04 g (0.1 g) | 0.05 g (0.1 g) | 2(2) | 2(2) |
| Calcium | 135 mg | 169 mg | | |

| | | | | |
|---|---|---|---|---|
| ^{**} % of adults guideline daily amount | | | | |

### Mixing with cereals:

125 g of the strawberry pouring yogurt described above is mixed with 30 g of the following cereals:
- Kellogg's Original Corn flakes®
- Kellogg's Special K®
One provides from the packaging to bowl, then one pours the yogurt onto the cereals, then one stirs the mixture with a spoon.

The nutritional profile of a mixture of cereals and yogurt is as follows (the nutritional profile of the cereals is reported from the packaging).

| | 125 g yogurt + 30 g Corn Flakes (% GDA UK) | 125 g half skimmed milk* + 30 g Corn flakes (% GDA UK) | 125 g yogurt + 30 g Special K® (% GDA UK) | 125 g half skimmed milk* + Special K® (% GDA UK) |
|---|---|---|---|---|
| Energy | 188 (9% GDA) | 174 (9% GDA) | 188 (9% GDA) | 174 (9% GDA) |
| Protein | 7 (16% GDA) | 6.5 (14% GDA) | 9.1 (20% GDA) | 8.6 (19% GDA) |
| Carbohydrate | 34.3 (15% GDA) | 31.1 (14% GDA) | 31.9 (14% GDA) | 28.7 (12% GDA) |
| Of which sugar | 11.4 (13% GDA) | 8.3 (9% GDA) | 14.1 (16% GDA) | 11.0 (12% GDA) |
| Fat | 2.27 (3% GDA) | 2.4 (3% GDA) | 2.45 (4% GDA) | 2.6 (4% GDA) |
| Fibre | 1 (4% GDA) | 0.9 (4% GDA) | 0.85 (4% GDA) | 0.8 (3% GDA) |

| | | | | |
|---|---|---|---|---|
| * values extracted from Dairy council report | | | | |

The nutritional profile of the yogurt is almost equivalent to the nutritional profile of a similar mixture of milk and the same cereals.

### Example 4

An organoleptic test is carried out with selected persons.
The products of Examples 1 to 3 are tested on few respondents (per flavour), who are relevant regarding the consumer target: women (aged 25-65) buying yogurts. The fermented dairy product is poured from a container onto cereals, which are contained in a cup or a plate. The test is carried out several times, with various cereals, including Corn Flakes, Special K (Kellog®), Crunchy Nut (Kellog®).
The following attributes (referred to as reactions) are given:
Reactions (by marking) are reported below:

| Reaction | Example 1 (plain), scores. | Example 2 (vanilla), scores. | Example 3 (strawberry), scores. |
|---|---|---|---|
| The product has a perfect pouring consistency* | 0, 0, 0, 0, 0, 0, 0 | 0, 0, 0, 0, -1, -1, +1, +1 | n.d. |
| | (marking scale 1)* | (marking scale 1)* | |
| Flavour Intensity and Sweetness** | 5, 5, 9, 10, 7, 6, 10 | 0, 0, 0, 0, 0, 0, 0, +1 | 0, 0, 0, 0, 0, 0, -1, -1 |
| | (marking scale 2)^{**} | (marking scale 1)^{*} | (marking scale |
| Score of the optimised formula (tested on cereals)** | 10, 10, 9, 10, 10, 10, 10, 10, 10, 10, 10, 8, 9, 9, 10, 10, 10, 9, 9, 8, 8 | 10, 10, 10, 10, 10, 9, 9, 7 | 9,9,9,9,9,9, 10 |
| | (marking scale 2)^{**} | (marking scale 2)^{**} | (marking scale 2)^{**} |

| | | | |
|---|---|---|---|
| * marking scale 1: 0=perfect, -3=too little, +3=too much. ** marking scale 2: marking from 1 (doesn't like at all) to 10 (like it very much). | | | |

### Example 5: Covering of cereals and/or flow on cereals

One implements the tests described below with the materials described below.

### Materials:

| | | | |
|---|---|---|---|
| Cereals: | Corn Flakes, Kellogg® | | |
| Product 1: | Half Skim Milk marketed as "Lait demi ecreme Viva", Candia® | | |
| Product 2: | Actimel® Plain, Danone® | | |
| Product 3: | Product 3 is a low-fat pouring yogurt containing the same culture as in Example 1, and having the nutritional profile provided below: | | |

| Nutritional value | Per 100g | Per portion (125g) | % Daily value |
|---|---|---|---|
| Energy (Kj) | 209 | 282 | |
| Energetical value (Kcal) | 50 | 67 | 3 |
| Proteins (g) | 4,2 | 5,7 | 11 |
| Total carbohydrate (g) | 4,4 | 5,9 | 2 |
| sugars (g) | 4,4 | 5,9 | 7 |
| Total Fat (g) | 1,7 | 2,3 | 3 |
| saturated fatty acids (g) | 1,1 | 1,5 | 8 |
| Dietary fibers (g) | 0 | 0 | 0 |
| Sodium (g) | 0,06 | 0,08 | 3 |
| Calcium (mg) | 150 | 203 | |
| Vitamin B12 (µg) | | | |
| Product 4: | Activia® plain stirred fermented milk, Danone®. | | |

### Tests

Viscosity: The viscosities of the products are measured according to the procedure described in Example 1. These are reported in Table I below.

Covering and/or flow: One introduces 30g of cereals in a glass column having a diameter of 40 mm. The 30g of cereals are lodged in the column at a height of 225 ± 15 mm. One pours 130 g of product onto to cereals, quickly, with avoiding contact between the product and the column walls before the product reaches the cereals. The product then flows through the cereals. One measures the time needed for the product flow front to reach the bottom of the column. This time is reported as "Transfer time" on Table I below (average time of 3 measures). The product is left to further flow from the column to a recipient. The amount of product recovered is evaluated. The column and the recipients are observed, and pictures are provided in figures.

**Table I**

| | Example 5.1 (comparative) | Example 5.2 (comparative) | Example 5.3 | Example 5.4 (comparative) |
|---|---|---|---|---|
| Product tested | Product 1 | Product 2 | Product 3 | Product 4 |
| Viscosity (mPa.s) | 2.8 | 17.5 | 342.5 | 1050 |
| Transfer time (s) | 1.2 | 1.4 | 142 | Higher than 30 minutes |
| Observation of column after flow | Figure 1a: The product does not cover the cereals | Figure 2a: The product does not cover the cereals | Figure 3a: Almost all the product remains in the column and covers the cereals | Figure 4a: The product does not reach the bottom. Most of the cereals are not covered |
| Observation of recipient | Figure 1 b: About 80-90% of product passed the column | Figure 2b: About 80-90% of product passed the column | Figure 3b: Less than 10% of product passed the column | No product passed the column |

This test shows that product 3 allows a progressive covering of the cereals and that the cereals remain covered by product 3. Comparative products 2 and 1 do not allow a progressive covering and comparative product 4 does not allow a covering of the cereals. This product would require much stirring that might break the cereals.

### Example 6: Softness / Crunchiness of cereals

One uses the same materials as described in Example 5.

One evaluates the delivery of softness of the cereals by measuring the remaining crunchiness after contact between the cereals and the product.

Crunchiness test: The test is performed with a TA-XT2 Texture Analyzer with using a Kramer Cell with a 5 blades mobile. Cereals are sieved (5 mm sieve) to eliminate broken cereals. Then 10 g of sieved cereals are placed in the tank of the Kramer Cell. The tank is placed in a container containing the product to be tested, so that the bulk of cereals is immerged in the product. The contact time is 30s. The tank is then placed on the platform of the Analyzer, such that it can receive the mobile. The mobile goes down at a speed of 1 mm/s, on a maximum distance of 50 mm, through the cereals contacted with the tested product. Some values can be extracted:
- penetration strength at various distance
- maximum penetration strength
- average penetration strength
- area under the penetration curve

Upon cracking of a cereal, the penetration strength exhibits a peak. The crunchiness is reported on Table II below as the number of peaks of higher than 0.1 N. A high number of peaks corresponds to a high number of cereals cracks. The higher the number of peaks is, the crunchier the product is. The experiments are repeated 3 times, and the average value is reported.

**Table II**

| | Example 6.1 (comparative) | Example 6.2 (comparative) | Example 6.3 | Example 6.4 (comparative) |
|---|---|---|---|---|
| Product tested | Product 1 | Product 2 | Product 3 | Product 4 |
| Viscosity (mPa.s) | 2.8 | 17.5 | 342.5 | 1050 |
| Number of peaks | 41 | 41 | 62 | 46 |

This test shows an unexpected higher crunchiness with product 3, compared to the other products, after 30s contact. Accordingly the cereals remain crunchy a longer time after contact, or are crunchier after an equivalent time. Accordingly softness is delivered more progressively with product 3, than with comparative products 1, 2 and 4. Moreover and anyway, product 4 hardly allows a covering of the cereals.

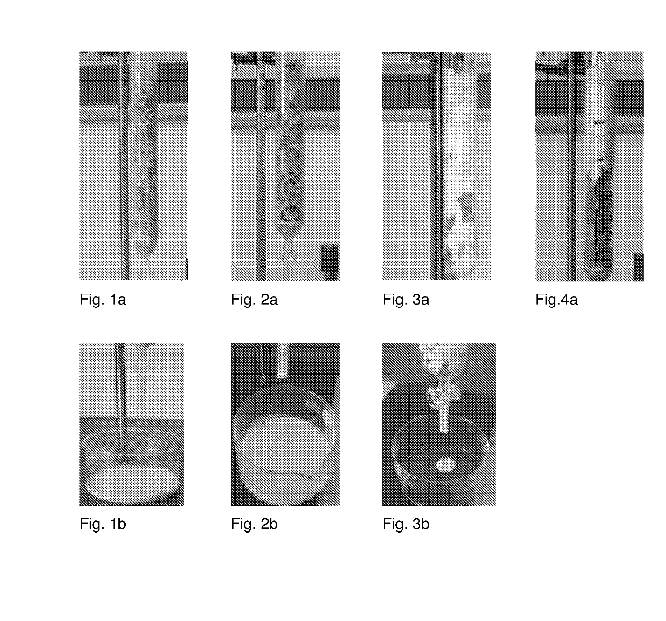

## Claims

1. The use of a fermented dairy product contained in a container for mixing with cereals, wherein the mixing comprises the following steps:
a) providing cereals in a recipient having an upper opening, preferably a bowl, a cup, a glass, or a plate,
b) pouring the fermented dairy product from the container onto the cereals, and
c) optionally stirring with a stirring mean, preferably with a spoon,
and wherein the fermented dairy product has a viscosity of from 300 to 600 mPa.s, preferably of from 400 to 550 mPa.s, measured at 10°C, at a shear rate of 64 s⁻¹, after 10 s at this shear rate, with a rheometer with 2 co-axial cylinders.

2. The use according to claim 1, wherein the fermented dairy product further has the following features, for 100 g of product:
- energy of less than 65 kcal, preferably less than 60 kcal, preferably less than 55 kcal,
- carbohydrate of less than 10 g,
- added sugar of less than 10 g,
- proteins of less than 10 g, preferably less than 5 g, and/or
- fat of more than 1 g and optionally less than 3.5 g.

3. The use according to any of the preceding claims, wherein the fermented dairy product comprises lactic acid bacteria.

4. The use according to claim 3, wherein the lactic acid bacteria comprises:
- a mixture of *Streptococcus thermophilus* and *Lactobacillus delbrueckii* subsp. *bulgaricus,* and
- optionally a *Bifidobacterium.*

5. The use according to any of the preceding claims, wherein the fermented dairy product is a yogurt or a fermented milk product.

6. The use according to any of the preceding claims, wherein the fermented dairy product comprises *Bifidobacteria* preferably at least 10⁷ CFU/g of *Bifidobacteria.*

7. The use according to any of the preceding claims, wherein the fermented dairy product has a total carbohydrate content of higher than 5% by weight, and preferably of lower than 15% by weight.

8. The use according to any of the preceding claims, wherein the fermented dairy product has a fat content of from 1.5 % to 2.5% by weight, preferably of from 1.9% to 2.1% by weight.

9. The use according to any of the preceding claims, wherein the fermented dairy product is free of cereals.

10. The use according to any of the preceding claims, wherein the fermented dairy product is a plain product.

11. The use according to any of the preceding claims, wherein the fermented dairy product has no added sugar.

12. The use according to any of claims 1 to 9, wherein the fermented dairy product comprises a fruit preparation, an aroma, and/or chocolate chips.

13. The use according to any of the preceding claims, wherein the container has a pouring mean, or can be modified to present a pouring mean, said pouring mean being preferably a neck, a corner or a spout.

14. The use according to any of the preceding claims, wherein the container is a plastic bottle or a brick carton.

15. The use according to any of the preceding claims, wherein the container is a 125 ml or 125 g container, a 200 ml or 200 g container, a 250 ml or 250 g container, a 500 ml or 500 g container, a 750 ml or 750 g container, a 1 l or 1 kg container, or a 1.5 l or 1.5 kg container.

16. The use according to any of the preceding claims, wherein the container is not associated to a container comprising cereals.

17. The use according to any of the preceding claims, wherein the cereals are provided from a container different from said recipient.

18. The use according to any of the preceding claims, wherein the cereals are:
- cereals clusters,
- cereals flakes,
- crisped cereals, or
- a mixture thereof.

19. The use according to any of the preceding claims, wherein the weight ratio between the fermented dairy product and the cereals is higher than 2.24.

20. The use according to any of the preceding claims, wherein the container presents indications to pour a fermented dairy product onto the cereals, preferably a written suggestion, a recommendation, an instruction, a drawing, a picture, or an association of these indications.

21. A process of mixing a fermented dairy product contained in a container with cereals, comprising the steps of:
a) providing cereals in a recipient having an upper opening, preferably a bowl, a cup, a glass, or a plate,
b) pouring the fermented dairy product from the container onto the cereals, and
c) optionally stirring with a stirring mean, preferably with a spoon,
wherein the fermented dairy product has a viscosity of from 300 to 600 mPa.s, preferably of from 400 to 550 mPa.s, measured at 10°C, at a shear rate of 64 s-1, after 10 s at this shear rate, with a rheometer with 2 co-axial cylinders.

22. A process according to claim 21, wherein the fermented dairy product and/or the container and/or the cereals are as described in any of claims 2 to 20.

## Patentansprüche

1. Verwendung eines fermentierten Molkereiprodukts, das in einem Behälter enthalten ist, zum Mischen mit Getreide, worin das Mischen die folgenden Schritte umfasst:
a) Bereitstellen von Getreide in einem Aufnahmebehältnis mit einer oberen Öffnung, vorzugsweise einer Schüssel, einer Tasse, einem Glas oder einem Teller,
b) Gießen des fermentierten Molkereiprodukts aus dem Behälter auf das Getreide und
c) optional Rühren mit einem Rührmittel, vorzugsweise einem Löffel, und worin das fermentierte Molkereiprodukt eine Viskosität von 300 bis 600 mPa·s, vorzugsweise von 400 bis 550 mPa·s hat, gemessen bei 10 °C, bei einer Scherrate von 64 s⁻¹, nach 10 s bei dieser Scherrate mit einem Rheometer mit 2 koaxialen Zylindern.

2. Verwendung nach Anspruch 1, worin das fermentierte Molkereiprodukt weiterhin die folgenden Merkmale für 100 g Produkt aufweist:
- eine Energie von weniger als 65 kcal, vorzugsweise weniger als 60 kcal, vorzugeweise weniger als 55 kcal,
- weniger als 10 g Kohlenhydrat,
- weniger als 10 g zugegebenen Zucker,
- weniger als 10 g, vorzugsweise weniger als 5 g Proteine und/oder
- mehr als 1 g und optional weniger als 3,5 g Fett.

3. Verwendung nach einem der vorhergehenden Ansprüche, worin das fermentierte Molkereiprodukt Milchsäurebakterien umfasst.

4. Verwendung nach Anspruch 3, worin die Milchsäurebakterien umfassen:
- ein Gemisch von *Streptococcus thermophilus* und *Lactobacillus delbrueckii,* Subsp. *bulgaricus,* und
- optional ein *Bifidobakterium.*

5. Verwendung nach einem der vorhergehenden Ansprüche, worin das fermentierte Molkereiprodukt ein Yoghurt oder ein fermentiertes Milchprodukt ist.

6. Verwendung nach einem der vorhergehenden Ansprüche, worin das fermentierte Molkereiprodukt *Bifidobakterien* umfasst, vorzugsweise mindestens 10⁷ CFU/g *Bifidobakterien.*

7. Verwendung nach einem der vorhergehenden Ansprüche, worin das fermentierte Molkereiprodukt einen Kohlenhydratgesamtgehalt von höher als 5 Gew.-% und vorzugeweise weniger als 15 Gew.-% hat.

8. Verwendung nach einem der vorhergehenden Ansprüche, worin das fermentierte Molkereiprodukt einen Fettgehalt von 1,5 bis 2,5 Gew.-%, vorzugsweise 1,9 bis 2,1 Gew.-% hat.

9. Verwendung nach einem der vorhergehenden Ansprüche, worin das fermentierte Molkereiprodukt frei von Getreide ist.

10. Verwendung nach einem der vorhergehenden Ansprüche, worin das fermentierte Molkereiprodukt ein Reinprodukt ist.

11. Verwendung nach einem der vorhergehenden Ansprüche, worin das fermentierte Molkereiprodukt keinen zugegebenen Zucker enthält.

12. Verwendung nach einem der Ansprüche 1 bis 9, worin das fermentierte Molkereiprodukt eine Fruchtzubereitung, ein Aroma und/oder Schokoladeflocken umfasst.

13. Verwendung nach einem der vorhergehenden Ansprüche, worin der Behälter ein Ausgießmittel aufweist oder modifiziert werden kann, um ein Ausgießmittel aufzuweisen, wobei das Ausgießmittel vorzugsweise ein Hals eine Ecke oder ein Ausguss ist.

14. Verwendung nach einem der vorhergehenden Ansprüche, worin der Behälter eine Kunststoffflasche oder ein Getränkekarton ist.

15. Verwendung nach einem der vorhergehenden Ansprüche, worin der Behälter ein 125 ml- oder 125 g-Behälter, ein 200 ml- oder 200 g-Behälter, ein 250 ml- oder 250 g-Behälter, ein 500 ml- oder 500 g-Behälter, ein 750 ml- oder 750 g-Behälter, ein 1 l- oder 1 kg-Behälter oder ein 1,5 ml- oder 1,5 kg-Behälter ist.

16. Verwendung nach einem der vorhergehenden Ansprüche, worin der Behälter nicht mit einem Behälter verbunden ist, der Getreide enthält.

17. Verwendung nach einem der vorhergehenden Ansprüche, worin das Getreide aus einem Behälter bereitgestellt wird, der verschieden von dem Aufnahmebehältnis ist.

18. Verwendung nach einem der vorhergehenden Ansprüche, worin das Getreide:
- Getreideklümpchen,
- Getreideflocken,
- knuspriges Getreide oder
- ein Gemisch davon ist.

19. Verwendung nach einem der vorhergehenden Ansprüche, worin das Gewichtsverhältnis zwischen dem fermentierten Molkereiprodukt und dem Getreide höher als 2,24 ist.

20. Verwendung nach einem der vorhergehenden Ansprüche, worin der Behälter Angaben zum Gießen eines fermentierten Molkereiprodukts auf Getreide aufweist, vorzugsweise ein schriftlicher Hinweis, eine Empfehlung, eine Anleitung, eine Zeichnung, ein Bild oder eine Verbindung dieser Angaben.

21. Verfahren zum Mischen eines fermentierten Molkereiprodukts, das in einem Behälter enthalten ist, mit Getreide, umfassend die Schritte:
a) Bereitstellen von Getreide in einem Aufnahmebehältnis mit einer oberen Öffnung, vorzugsweise einer Schüssel, einer Tasse, einem Glas oder einem Teller,
b) Gießen des fermentierten Molkereiprodukts aus dem Behälter auf das Getreide und
c) optional Rühren mit einem Rührmittel, vorzugsweise einem Löffel, worin das fermentierte Molkereiprodukt eine Viskosität von 300 bis 600 mPa·s, vorzugsweise von 400 bis 550 mPa·s hat, gemessen bei 10 °C, bei einer Scherrate von 64 s⁻¹, nach 10 s bei dieser Scherrate mit einem Rheometer mit 2 koaxialen Zylindern.

22. Verfahren nach Anspruch 21, worin das fermentierte Molkereiprodukt und/oder der Behälter und/oder das Getreide wie in einem der Ansprüche 2 bis 20 beschrieben, sind.

## Revendications

1. Utilisation d'un produit laitier fermenté contenu dans un contenant pour mélanger avec des céréales, dans laquelle le mélange comprend les étapes suivantes :
a) la fourniture de céréales dans un récipient ayant une ouverture supérieure, de préférence un bol, une tasse, un verre ou une assiette,
b) le versement du produit laitier fermenté du contenant sur les céréales, et
c) éventuellement, l'agitation avec un moyen d'agitation, de préférence avec une cuillère,
et dans laquelle le produit laitier fermenté a une viscosité de 300 à 600 mPa.s, de préférence de 400 à 550 mPa.s, mesurée à 10 °C, à un taux de cisaillement de 64 s⁻¹, après 10 s à ce taux de cisaillement, avec un rhéomètre comportant 2 cylindres coaxiaux.

2. Utilisation selon la revendication 1, dans laquelle le produit laitier fermenté a en outre les caractéristiques suivantes, pour 100 g de produit :
- une énergie inférieure à 65 kcal, de préférence inférieure à 60 kcal, de préférence inférieure à 55 kcal,
- des glucides à moins de 10 g,
- du sucre ajouté à moins de 10 g,
- des protéines à moins de 10 g, de préférence à moins de 5 g, et/ou
- des matières grasses à plus de 1 g et éventuellement moins de 3,5 g.

3. Utilisation selon l'une quelconque des revendications précédentes, dans laquelle le produit laitier fermenté comprend une bactérie lactique.

4. Utilisation selon la revendication 3, dans laquelle la bactérie lactique comprend :
- un mélange de *Streptococcus thermophilus* et de *Lactobacillus delbrueckii* subsp. *bulgaricus,* et
- éventuellement un *Bifidobacterium.*

5. Utilisation selon l'une quelconque des revendications précédentes, dans laquelle le produit laitier fermenté est un yogurt ou un produit laitier fermenté.

6. Utilisation selon l'une quelconque des revendications précédentes, dans laquelle le produit laitier fermenté comprend des *Bifidobacteria,* de préférence au moins 10⁷ UFC/g de *Bifidobacteria.*

7. Utilisation selon l'une quelconque des revendications précédentes, dans laquelle le produit laitier fermenté a une teneur en glucide supérieure à 5 % en poids et de préférence inférieure à 15 % en poids.

8. Utilisation selon l'une quelconque des revendications précédentes, dans laquelle le produit laitier fermenté a une teneur en matières grasses de 1,5 % à 2,5 % en poids, de préférence de 1,9 % à 2,1 % en poids.

9. Utilisation selon l'une quelconque des revendications précédentes, dans laquelle le produit laitier fermenté est sans céréales.

10. Utilisation selon l'une quelconque des revendications précédentes, dans laquelle le produit laitier fermenté est un produit nature.

11. Utilisation selon l'une quelconque des revendications précédentes, dans laquelle le produit laitier fermenté n'a pas de sucre ajouté.

12. Utilisation selon l'une quelconque des revendications 1 à 9, dans laquelle le produit laitier fermenté comprend une préparation à base de fruit, un arôme et/ou des copeaux de chocolat.

13. Utilisation selon l'une quelconque des revendications précédentes, dans laquelle le contenant a un moyen de versement ou peut être modifié de façon à présenter un moyen de versement, ledit moyen de versement étant de préférence un col, un coin ou un bec.

14. Utilisation selon l'une quelconque des revendications précédentes, dans laquelle le contenant est une bouteille en plastique ou une brique en carton.

15. Utilisation selon l'une quelconque des revendications précédentes, dans laquelle le contenant est un contenant de 125 ml ou de 125 g, un contenant de 200 ml ou de 200 g, un contenant de 250 ml ou 250 g, un contenant de 500 ml ou 500 g, un contenant de 750 ml ou 750 g, un contenant d' 1 1 ou d'1 kg ou un contenant de 1,5 1 ou 1,5 kg.

16. Utilisation selon l'une quelconque des revendications précédentes, dans laquelle le contenant n'est pas associé à un contenant comprenant des céréales.

17. Utilisation selon l'une quelconque des revendications précédentes, dans laquelle les céréales sont fournies à partir d'un contenant différent dudit récipient.

18. Utilisation selon l'une quelconque des revendications précédentes, dans laquelle les céréales sont :
- des grappes de cérales,
- des flocons de cérales,
- des céréales croustillantes, ou
- un mélange de ceux-ci.

19. Utilisation selon l'une quelconque des revendications précédentes, dans laquelle le rapport en poids entre le produit laitier fermenté et les céréales est supérieur à 2,24.

20. Utilisation selon l'une quelconque des revendications précédentes, dans laquelle le contenant présente des indications pour verser un produit laitier fermenté sur les céréales, de préférence une suggestion écrite, une recommandation, une instruction, un dessin, une image ou une association de ces indications.

21. Procédé de mélange d'un produit laitier fermenté contenu dans un contenant avec des céréales, comprenant les étapes de :
a) fourniture de céréales dans un récipient ayant une ouverture supérieure, de préférence un bol, une tasse, un verre ou une assiette,
b) versement du produit laitier fermenté du contenant sur les céréales, et
c) éventuellement, agitation avec un moyen d'agitation, de préférence avec une cuillère,
dans lequel le produit laitier fermenté a une viscosité de 300 à 600 mPa.s, de préférence de 400 à 550 mPa.s, mesurée à 10 °C, à un taux de cisaillement de 64 s⁻¹, après 10 s à ce taux de cisaillement, avec un rhéomètre comportant 2 cylindres coaxiaux.

22. Procédé selon la revendication 21, dans lequel le produit laitier fermenté et/ou le contenant et/ou les céréales sont tels que décrits dans l'une quelconque des revendications 2 à 20.
